# EUROPEAN PATENT APPLICATION

(11) **EP 3 750 935 A1**
(43) Date of publication of application: **16.12.2020**
(21) Application number: 19180191.9
(22) Date of filing: 14.06.2019
(51) Int. Cl.: C08G 59/18, B32B 15/092, B32B 27/38, C07C 253/28, C08G 59/56, C08G 59/60, C08G 65/333, C08L 63/00, C09D 163/00, C09K 3/00

(54) **NON-COMBUSTIBLE WATERBORNE SELF LEVELLING EPOXY FLOOR**

(71) Applicant: SIKA TECHNOLOGY AG, 6340 Baar (CH)
(72) Inventor: Thomson, Alison, Preston, Lancashire PR54PE (GB); Martin, Ian, Clitheroe, Lancashire BB7 9UN (GB); Conrad, Lars, 74321 Bietigheim-Bissingen (DE); Teichert, David, 71640 Ludwigsburg (DE)
(74) Representative: Sika Patent Attorneys

(57) **Abstract**

The present invention relates to an epoxy composition including
- a waterborne hardener component containing an amine functional adduct, which is a reaction product of at least one polyether amine, at least one polyalkylene amine, at least one arylaliphatic or cycloaliphatic amine, at least one polyether epoxy resin and at least one aromatic liquid epoxy resin,
- a resin component containing at least one liquid epoxy resin and
- mineral fillers,
wherein the composition contains mineral fillers in the range of 85 to 95 weight-% based on the total solids of the composition.

The inventive epoxy composition enables floor coatings with low emission, low shrinkage and high impact resistance, which can be applied in a layer thickness of 1 to 3 mm or more in one step, cure to a decorative, faultless and glossy surface without the need to be overcoated and generate a low enough heat upon burning to fulfill the fire classification A2fl according to EN 13501-1.

## Description

### Technical field

Epoxy compositions and their use as floor coatings.

### State of the art

Epoxy floors for decorative purpose are widely used in applications such as industrial floors or parking decks. Such floors are typically processed by mixing two liquid components, optionally together with a filler component, followed by the application of the mixed components as self-leveling coating in a layer thickness of approximately 1 to 3 mm. The finished surface of such a floor has to be hard, highly resistant against mechanical and chemical attack and has to meet high aesthetical standards, i.e. an evenly glossy aspect without spots, cracks or other defects. If the cured surface doesn't meet these aesthetical standards, the floor can't be used for decorative purpose and has to be overcoated with a top coat, which is typically applied in a layer thickness of approximately 0.1 to 0.5 mm. The application of a top coat can ensure a high quality surface, but it also means an additional working step and therefore additional time and cost.

There is a need for buildings with high fire resistance. To achieve this, all materials of a building are classified for their fire resistance, including the floors. There is a need for epoxy floors to fulfill A2fl fire classification according to EN 13501-1. One requirement to fulfill this is a low heat generation of less than 3 MJ/kg when the floor material is burnt as described. State of the art epoxy floors, which fulfill this requirement, are either not low viscous enough to be applied in a layer thickness of 1 to 3 mm as self-leveling coating (at low enough solvent or water content to be useable in this layer thickness without too much shrinkage), or they are developping a non-glossy, patchy surface, which is not usable for decorative purpose, i.e. it has to be overcoated.

WO 2018/166897 describes an epoxy composition suitable for floor coatings with good workability, nice surface and a relatively high content of mineral fillers. The filler content of the good examples is below 70 weight-% based on solids, and the compositions contain an adduct, which is prepared in a complicated multi stage process. With these compositions, it is not possible to achieve a high enough filler content to enable epoxy floors with a low enough heat generation to fulfill the A2fl fire classification according to EN 13501-1.

EP 2'961'784 describes a water reducible curing agent for epoxy resins obtained by reacting a diprimary amine, a monoprimary amine and a polyepoxy compound. This curing agent enables epoxy based coatings with good workability and flow properties at relatively high filler content (79 weight-% mineral fillers in example 1 on solids). But these coatings develop a non-glossy patchy surface and need to be overcoated for decorative purpose, and they generate still too much heat upon burning to fulfil A2fl fire classification according to EN 13501-1.

There are no self-leveling epoxy floors on the market, which can be applied in a layer thickness of 1 to 3 mm or more and achieve both a high quality surface for decorative purpose and generate a low enough heat upon burning to fulfill the A2fl fire classification according to EN 13501-1.

### Summary of the invention

The task of this invention is to provide an epoxy composition with good flow and self-leveling properties, which is usable as floor coating for decorative purpose without the need to be overcoated and generates less than 3 MJ/kg heat when the floor material is burnt as described in EN 13501-1.

This task is achieved by the epoxy composition according to claim 1, including a waterborne hardener component containing a particular amine functional adduct and a very high content of mineral fillers in the range of 85 to 95 weight-% based on solids. Surprisingly it was found, that the particular amine functional adduct based on (a) at least one polyether amine, (b) at least one polyalkylene amine, (c) at least one arylaliphatic or cycloaliphatic amine, (d) at least one polyether epoxy resin and (e) at least one aromatic liquid epoxy resin allows a unique combination of good flow and self-leveling properties at this high filler content together with an even and glossy surface without defects upon cure at ambient conditions. The adduct enables a low viscous hardener component at low water content without the need of high amounts of organic solvents or diluents. The composition according to claim 1 enables a high cure speed and long open time, low shrinkage without crack formation at high layer thickness, such as 1 to 3 mm, a good impact resistance and a glossy and even surface upon curing at ambient conditions. The adduct in the hardener component is particularly easy to produce without the need of a multi-step process, as it is often necessary for state of the art waterborne hardeners for high quality surfaces. The inventive adduct can be made in a simple and fast one step process by reacting the mixed amines with the mixed epoxy resins.

The inventive epoxy composition enables floor coatings with low emission, low shrinkage and high impact resistance, which can be applied in a layer thickness of 1 to 3 mm or more in one step, cure to a decorative, faultless and glossy surface without the need to be overcoated, and generate a low enough heat upon burning to fulfill the fire classification A2fl according to EN 13501-1.

Other aspects of the invention are described in other independent claims. Preferred aspects of the invention are described in dependent claims.

### Detailed description of the invention

The subject of the invention is an epoxy composition including
- a waterborne hardener component containing an amine functional adduct, which is a reaction product of
   (a) at least one polyether amine,
   (b) at least one polyalkylene amine,
   (c) at least one arylaliphatic or cycloaliphatic amine,
   (d) at least one polyether epoxy resin, and
   (e) at least one aromatic liquid epoxy resin,
- a resin component containing at least one liquid epoxy resin, and
- mineral fillers,
wherein the composition contains mineral fillers in the range of 85 to 95 weight-% based on the total solids of the composition.

In this document, a hardener is called "waterborne" if it contains a significant amount of water, typically at least 5 weight-%.

In this document, a resin component is called "waterborne" if it contains a significant amount of water, preferably at least 20 weight-%, in which the resin is emulsified.

The term "polyether amine" refers to an amine functional polyether.

The term "polyalkylene amine" refers to a linear polyamine which contains at least three amine groups separated from each other by alkylene groups.

The term "arylaliphatic amine" refers to a molecule with an amine group which is connected to an aliphatic carbon atom of an arylaliphatic moiety.

The term "cycloaliphatic amine" refers to a molecule with an amine group which is connected to an aliphatic carbon atom of a cycloaliphatic moiety.

The term "solids" or "solids content" refers to the proportion of a composition, from which all the volatile ingredients, such as water or solvents, were evaporated. It can be determined arithmetically or by drying the composition in an infrared dryer or in a circulated air oven to a constant weight.

The term "primary amine" refers to an amine group, which is connected to only one organic moiety and carries two hydrogens; the term "secondary amine" refers to an amine group, which is connected to two organic moieties, which may also be a part of a ring together, and carries one hydrogen; and the term "tertiary amine" refers to an amine group, which is connected to three organic moieties, which may also be part of one or more rings, and carries no hydrogens.

The term "amine hydrogen" refers to the hydrogens of primary and secondary amine groups.

The term "amine hydrogen equivalent weight" refers to the mass of an amine or an amine containing composition, which contains one mole equivalent of amine hydrogens.

Substance names starting with "poly", such as polyamine or polyepoxide, refer to substances carrying two or more of the respective functional groups per molecule. The term "molecular weight" refers to the molar mass (given in grams per mole) of a molecule. The term "average molecular weight" refers to the number average molecular weight Mₙ of a polydispersed mixture of oligomeric or polymeric molecules or molecule moieties. It is usually determined by gel permeation chromatography (GPC) against a polystyrene standard.

In this document, the term "room temperature" refers to a temperature of 23°C. The term "pot life" refers to the time period, which a multi component composition can be applied after mixing of the components without defects. A typical measure of the pot life can be a doubling of the viscosity.

The amine functional adduct is based on (a) at least one polyether amine. The polyether amine enables a particularly low viscosity and low shrinkage.

Preferred are polyether amines which are free of secondary or tertiary amine groups and contain two or three, particularly two, primary amine groups.

Suitable polyether amines contain preferably repetitive units selected from 1,2-ethylenoxy, 1,2-propylenoxy, 1,3-propylenoxy, 1,2-butylenoxy and 1,4-butylenoxy. Preferred are polyether amines with 1,2-ethylenoxy and/or 1,2-propylenoxy as repetitive units.

Particularly preferred are polyether amines containing only 1,2-propylenoxy as repetitive unit in the polyether chain. Such polyether amines are hydrophobic and enable a long pot life.

Preferred polyether amines have an average molecular weight Mₙ in the range of 200 to 5'000 g/mol, more preferred 200 to 2'000 g/mol, particularly 200 to 500 g/mol.

Most preferred is a polyoxypropylene diamine with an average molecular weight Mₙ in the range of 200 to 2'000 g/mol, preferably 200 to 500 g/mol. Such polyether amines are commercially available as Jeffamine® D-230, Jeffamine® D-400 or Jeffamine® D-2000 (all from Huntsman), for example.

The amine functional adduct is further based on (b) at least one polyalkylene amine. The polyalkylene amine enables good pigment dispersion properties, a good stability of the hardener component with no separation and a high gloss of the cured epoxy composition.

Preferably the polyalkylene amine is an amine of the formula (I), 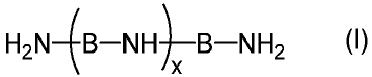 wherein
x is a whole number from 1 to 6, and
B is independently of each other a C₂ to C₆ alkylene group.

Such polyalkylene amines are typically used in a technical grade.

Suitable polyalkylene amines are particularly diethylenetriamine (DETA), triethylenetetramine (TETA), tetraethylenepentamine (TEPA), pentaethylenehexamine (PEHA), higher homologues of linearic polyethylene amines, dipropylenetriamine (DPTA), N-(2-aminoethyl)-1,3-propandiamine (N3-amine), N,N'-bis(3-aminopropyl)ethylenediamine (N4-amine), N,N'-bis(3-aminopropyl)-1,4-diaminobutane, N5-(3-aminopropyl)-2-methyl-1,5-pentandiamine, N3-(3-aminopentyl)-1,3-pentandiamine, N5-(3-amino-1-ethylpropyl)-2-methyl-1,5-pentandiamine, N,N'-bis(3-amino-1-ethylpropyl)-2-methyl-1,5-pentandiamine or bis(6-aminohexyl)amine (BHMT).

Preferably x is 2 or 3 or 4.

Preferably B is 1,2-ethylene and/or 1,3-propylene, particularly 1,2-ethylene.

A particularly preferred polyalkylene amine is TETA, TEPA, PEHA or N4-amine, particularly TETA, TEPA or PEHA. They enable a particularly good pigment wetting and a high cure rate. Most preferred is TEPA.

The amine functional adduct is further based on (c) at least one arylaliphatic or cycloaliphatic amine.

The arylaliphatic or cycloaliphatic amine has preferably two primary amine groups and is free from secondary or tertiary amine groups. It has preferably a molecular weight in the range of 100 to 300 g/mol.

Preferably, the arylaliphatic or cycloaliphatic amine has two primary amine groups and, apart from these, is free from further heteroatoms.

Suitable arylaliphatic or cycloaliphatic amines are particularly 1,2-diaminocyclohexane, 1,3-diaminocyclohexane, 1,4-diaminocyclohexane, 1,3-bis(aminomethyl)cyclohexane, 1,4-bis(aminomethyl)cyclohexane, bis(4-aminocyclohexyl)-methane, 4-(4-aminocyclohexylmethyl)aniline, bis(4-amino-3-methylcyclohexyl)-methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (Isophoronediamine or IPDA), 2(4)-methyl-1,3-diaminocyclohexane, 2,5(2,6)-bis(aminomethyl)bicyclo[2.2.1]heptane (norbornanediamine or NBDA), 3(4),8(9)-bis(aminomethyl)tricyclo[5.2.1.0²⁶]-decane, 1,4-diamino-2,2,6-trimethylcyclohexane (TMCDA), 1,8-menthandiamine, 1,3-bis(aminomethyl)benzene (MXDA), 1,4-bis(aminomethyl)benzene, dimer fatty acid based amines such as Priamine® 1071 or Priamine® 1074 (both from Croda), or phenalkamines, for example reaction products of cardanol, formaldehyde and primary diamines, commercially available from Cardolite.

Preferably the arylaliphatic or cycloaliphatic amine is selected from the group consisting of 1,3-bis(aminomethyl)cyclohexane, 1,4-bis(aminomethyl)cyclohexane, 1-amino-3-aminomethyl-3,5,5-trimethylcyclohexane, 2(4)-methyl-1,3-diaminocyclohexane, 2,5(2,6)-bis(aminomethyl)bicyclo[2.2.1]heptane and 1,3-bis(aminomethyl)-benzene.

Particularly preferred thereof is 1-amino-3-aminomethyl-3,5,5-trimethylcyclohexane or 1,3-bis(aminomethyl)benzene. Most preferred is 1,3-bis(aminomethyl)benzene.

The preferred amines enable well balanced hydrophilic properties, a low viscosity and a high reactivity.

The amine functional adduct is further based on (d) at least one polyether epoxy resin. The polyether epoxy resin enables a good flow behavior and a high impact resistance.

Preferably the polyether epoxy resin has an average molecular weight Mₙ in the range of 200 to 2'000 g/mol, particularly 300 to 1'500 g/mol.

Suitable polyether epoxy resins are particularly polyethylene glycol diglycidylethers, polypropylene glycol diglycidylethers, polytetrahydrofurane diglycidylethers or mixtures thereof.

The polyether epoxy resin is preferably a polypropylene glycol diglycidylether.

Most preferred, the polyether epoxy resin is a technical grade of a polypropylene glycol diglycidylether with an epoxy equivalent weight in the range of 150 to 750 g/mol, particularly 300 to 500 g/mol.

Such polyether epoxy resins are commercially available, such as D.E.R. 732 or D.E.R. 736P (both from Dow), Grilonit® F 704 (from EMS-Chemie) or Araldite® DY-F (from Huntsman), for example.

It can be beneficial to use a mixture of two or more grades of polyether epoxy resins to get most balanced hydrophilic properties and a low viscosity in the adduct.

The amine functional adduct is further based on (e) at least one aromatic liquid epoxy resin.

The aromatic liquid epoxy resin is typically a technical grade of an aromatic polyepoxide resin with a glass transition temperature below 25°C. In contrast, solid epoxy resins have a glass transition temperature above 25°C and can be comminuted to powders.

Suitable aromatic liquid epoxy resins are glycidylethers of
- bisphenol A, bisphenol F or bisphenol A/F, wherein A means acetone and F means formaldehyde, which were used to produce these bisphenols. A technical grade of bisphenol F can also contain positional isomers, particularly derived from 2,4'- or 2,2'-hydroxyphenylmethan;
- resorcinol, hydroquinone or catechol; or
- other bisphenols.

Preferably the aromatic liquid epoxy resin is a bisphenol A and/or F diglycidylether. Such epoxy resins are available from Dow, Huntsman, Hexion, Allnex or Momentive, for example.

To make the adduct, it is possible to use other amines and/or other glycidyl ethers additionally to the ones already mentioned.

In a preferred embodiment of the invention, a solid aromatic epoxy resin is used additionally to the liquid aromatic epoxy resin. This enables coatings with a particularly high gloss. Preferably the solid aromatic epoxy resin is used in an amount in the range of 5 to 15 weight-% based on the total weight of all the epoxy-functional substances in the adduct.

In a further preferred embodiment of the invention, an epoxy-functional reactive diluent is used together with the liquid aromatic epoxy resin, particularly a diglycidylether of 1,4-butandiol, 1,6-hexandiol or 1,4-cyclohexane dimethanol, or a monoglycidylether of C₁₂ to C₁₄ alcohols, C₁₃ to C₁₅ alcohols, phenol, cresol or p-tert.butylphenol. This enables adducts with a particularly low viscosity. Preferred are diglycidylethers, particularly a technical grade of 1,6-hexandiol diglycidylether. Bisphenol A and/or F diglycidlyethers, which contain a certain amount of reactive diluent, are commercially available.

The amine functional adduct is preferably made by reacting (a) the polyether amine, (b) the polyalkylene amine, (c) the arylaliphatic or cycloaliphatic amine and optionally further amine functional substances, with (d) the polyether epoxy resin, (e) the aromatic liquid epoxy resin and optionally further epoxy-functional substances, in such a way, that the ratio between the primary amine groups and the epoxy groups is more than 1.

Preferably the overall ratio between the primary amine groups and the epoxy groups in the reaction to form the amine functional adduct is in the range of 1.5 to 4, preferably 2 to 3. This ratio range enables a low viscosity adduct which cures to a coating with an even, glossy surface at ambient conditions.

The amine functional adduct is preferably made by reacting the amine group containing compounds with the epoxy group containing compounds at a temperature in the range of 15 to 120°C, preferably 40 to 100°C, more preferably 60 to 90°C. The chronological order of the reaction is free, as long as there is always an excess of primary amine groups to epoxy groups in the reaction mixture.

In a preferred embodiment, the amine functional adduct is made in a one pot reaction by mixing all the reactants together and letting them react in a temperature range between 50 to 130°C, preferably 60 to 100°C. It is preferred to premix the amines, optionally together with a solid epoxy resin, heat this mixture to at least 50°C and slowly add the polyether epoxy resin, the liquid aromatic epoxy resin and optionally reactive diluents under good stirring and temperature control. Such a one pot reaction is particularly easy and fast.

It is possible to add a second step to the production process by reacting the amine functional adduct with a monoepoxide, such as p-tert.butylphenyl glycidylether, for example. Such a second step is possible, but not necessary to get the described good performance of the epoxy composition.

Preferably, the adduct is made in a one pot reaction in only one step. Such a process is particularly easy and fast.

Preferably, the weight ratio between the polyether epoxy resin and the liquid aromatic epoxy resin is in the range of 30/70 to 80/20, preferably 50/50 to 75/25.

Preferably, the weight ratio between the polyether amine and the polyalkylene amine is in the range of 30/70 to 80/20, preferably 50/50 to 75/25.

Preferably, the weight ratio between the arylaliphatic or cycloaliphatic amine and the combined polyether amine plus polyalkylene amine is in the range of 5/95 to 40/60, preferably 10/90 to 30/70.

The preferred weight ratios enable a low viscosity, well balanced hydrophilic and hydrophobic properties and a decorative surface with high gloss.

Preferably the adduct is diluted with a first portion of water after the reaction between the amines and the epoxy resins is finished. With this first portion of water, the adduct is preferably diluted to a solids content in the range of 55 to 90 weight-%, preferably 60 to 80 weight-%. Like this, the adduct is storage stable and easy to use as part of a waterborne hardener component for epoxy resins.

Preferably the waterborne hardener component contains further water.

Additionally to the amine functional adduct, the waterborne hardener component contains preferably at least one further amine.

Suitable further amines are aliphatic, cycloaliphatic or arylaliphatic polyamines with at least 3 amine hydrogens, particularly 2,2-dimethyl-1,3-propanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2(4),4-trimethyl-1,6-hexanediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- or 1,4-diaminocyclohexane, 1,3-bis(aminomethyl)cyclohexane, 1,4-bis(aminomethyl)cyclohexane, bis(4-aminocyclohexyl)methane, bis(4-amino-3-methylcyclohexyl)methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (IPDA), 2(4)-methyl-1,3-diaminocyclohexane, 2,5(2,6)-bis(aminomethyl)bicyclo[2.2.1]heptane (NBDA), 3(4),8(9)-bis(aminomethyl)tricyclo-[5.2.1.0^{2,6}]decane, 1,4-diamino-2,2,6-trimethylcyclohexane (TMCDA), 1,8-menthandiamine, 3,9-bis(3-aminopropyl)-2,4,8,10-tetraoxaspiro[5.5]undecane, 1,3-bis(aminomethyl)benzene (MXDA), 1,4-bis(aminomethyl)benzene, bis(2-aminoethyl)ether, 3,6-dioxaoctane-1,8-diamine, 4,7-dioxadecane-1,10-diamine, 4,7-dioxadecane-2,9-diamine, 4,9-dioxadodecan-1,12-diamine, 5,8-dioxadodecane-3,10-diamine, 4,7,10-trioxatridecane-1,13-diamine or higher oligomers of these amines, bis(3-aminopropyl)polytetrahydrofurane or other polytetrahydrofurane-diamines, polyoxyalkylene di- or -triamines, particularly Jeffamine® D-230, Jeffamine® D-400, Jeffamine® D-2000, Jeffamine® EDR-104, Jeffamine® EDR-148, Jeffamine® EDR-176, Jeffamine® T-403, Jeffamine® T-3000, Jeffamine® T-5000 or Jeffamine® THF-100 (all from Huntsman), 2-aminoethylpiperazine, N-benzyldiethylentriamine, N-benzyltriethylentetramine, N,N'-dibenzyltriethylentetramin, N"-benzyl-N,N'-bis(3-aminopropyl)ethylendiamine, N",N'''-dibenzyl-N,N'-bis(3-aminopropyl)ethylenediamine, N-benzyl-1,3-bis(aminomethyl)benzene, N,N'-dibenzyl-1,3-bis(aminomethyl)benzene, N-(2-ethylhexyl)-1,3-bis(aminomethyl)benzene, N,N'-bis(2-ethylhexyl)-1,3-bis(aminomethyl)benzene, styrolinated MXDA (available as Gaskamine® 240 from Mitsubishi Gas Chem.), alkyloxypropyl-1,3-diaminopropanes with octyl, decyl, isodecyl, dodecyl, tetradecyl or isotridecyl as alkyl group, available as Tomamine® DA-1214, Tomamine® DA-14, Tomamine® DA-1618 or Tomamine® DA-17 (all from Evonik).

Preferred thereof are 2,2(4),4-trimethyl-1,6-hexanediamine (TMD), 1,2-, 1,3- or 1,4-diaminocyclohexane, 1,3-bis(aminomethyl)cyclohexane, 1,4-bis(aminomethyl)cyclohexane, 1-amino-3-aminomethyl-3,5,5-trimethylcyclohexane (IPDA), 2(4)-methyl-1,3-diaminocyclohexane, 2,5(2,6)-bis(aminomethyl)bicyclo[2.2.1]-heptane (NBDA), 1,3-bis(aminomethyl)benzene (MXDA) and polyoxypropylene di- or -triamines with an average molecular weight Mₙ in the range of 200 to 500 g/mol, particularly Jeffamine® D-230, Jeffamine® D-400 or Jeffamine® T-403 (all from Huntsman).

Particularly preferred are IPDA, MXDA and/or polyoxypropylene di- or -triamines with an average molecular weight Mₙ in the range of 200 to 500 g/mol.

The resin component contains at least one liquid epoxy resin.

Suitable liquid epoxy resins are particularly aromatic epoxy resins, particularly glycidylethers of
- bisphenol A, bisphenol F or bisphenol A/F;
- resorcinol, hydroquinone or catechol;
- other bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert.butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]-benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)-ethane, bis(4-hydroxyphenyl)ether or bis(4-hydroxyphenyl)sulfone.

- novolaks, which are preferably products of the condensation of phenols or cresols with formaldehyde, paraformaldehyde, acetaldehyde, crotonaldehyde, isobutyraldehyde, 2-ethylhexanal, benzaldehyde or furfuraldehyde;
- aromatic amines such as aniline, toluidine, 4-aminophenol, 4,4'-methylendiphenyldiamine, 4,4'-methylendiphenyldi-(N-methyl)amine, 4,4'-[1,4-phenylenbis(1-methylethyliden)]bisaniline (bisaniline P) or 4,4'-[1,3-phenylen-bis(1-methylethyliden)]bisaniline (bisaniline M).

Suitable liquid epoxy resins are further aliphatic or cycloaliphatic polyepoxides, particularly
- the glycidylethers of di-, tri- or tetrafunctional C₂- to C₃₀-alcohols, particularly of ethylene glycol, propylene glycol, butylene glycol, hexandiol, octandiol, polypropylene glycols, dimethylolcyclohexane, neopentylglycol, dibromoneopentylglycol, castor oil, trimethylolpropane, trimethylolethane, pentaerythrol, sorbitol or glycerol, or alkoxylated glycerol or trimethylolpropane;
- a hydrated liquid epoxy resin based on bisphenol A, F or A/F, or glycidylethers of hydrated bisphenol A, F or A/F respectively;
- a N-glycidyl derivate of an amide or a heterocyclic nitrogen base, such as triglycidylcyanurate or triglycidylisocyanurate, or reaction products of epichlorohydrin with hydantoin;
- epoxy resins from the oxidation of olefins, such as particularly vinylcylohexene, dicyclopentadiene, cyclohexadiene, cyclododecadiene, cyclododecatriene, isoprene, 1,5-hexadiene, butadiene, polybutadiene ordivinylbenzene.

The liquid epoxy resin of the resin component is preferably aromatic. It is preferably based on a bisphenol. Particularly it is a bisphenol A, F or A/F diglycidylether. These resins are low viscous and enable a fast curing and a high hardness. Optionally they contain some amounts of a solid bisphenol A resin or novolak glycidylethers.

Preferably the resin component further contains a reactive diluent, particularly butandiol diglycidylether, hexandiol diglycidylether, cyclohexanedimethanol diglycidylether, trimethylolpropane di- or triglycidylether, phenyl glycidylether, cresyl glycidlyether, p-tert.butylphenyl glycidlyether, nonylphenyl glycidlyether, dodecylphenyl glycidlyether, cardanol glycidylether, benzylglycidylether, allylglycidylether, butylglycidylether, hexylglycidylether, 2-ethylhexylglycidylether or monoglycidylethers of natural alcohols such as C₈ to C₁₀ alcohols, C₁₂ to C₁₄ alcohols or C₁₃ to C₁₅ alcohols.

Preferred thereof is butandiol diglycidylether, hexandiol diglycidylether, p-tert.butylphenyl glycidlyether, cardanol glycidylether or C₁₂ to C₁₄-or C₁₃ to C₁₅ alkylglycidyl-ethers.

Preferably the resin component further contains water.

Preferably the resin component is a waterborne resin component and contains water in the range of 20 to 50 weight-%, preferably 30 to 40 weight-%, based on the total of the resin component.

Preferably, the waterborne resin component further contains at least one surface active additive, preferably at least one emulsifier.

The epoxy composition contains mineral fillers in the range of 85 to 95 weight-% based on the total solids of the composition.

Suitable mineral fillers are particularly calcium carbonate, barite, talcum, quartz flour, quartz sand, silicon carbide, mica, dolomite, wollastonite, kaolin, mineral pigments such as titanium dioxide, iron oxides or chromium oxides, molecular sieves, aluminum oxide, aluminum hydroxide, magnesium hydroxide, silicic acid, cement, gypsum, fly ash, metallic powers such as aluminum, copper, iron, zinc, argent or steel.

Preferred mineral fillers are calcium carbonate, barite, quartz flour, quartz sand, titanium dioxide and combinations thereof.

Mineral fillers can be part of the hardener and/or the resin component, and/or they can be present in the form of a separately packed and stored filler component.

Preferably the epoxy composition includes a filler component additionally to the hardener and the resin component. The filler component is preferably a powdery material mainly consisting of mineral fillers.

Preferably, the filler component contains at least one quartz flour and/or quartz sand, particularly it contains quartz sand with a particle size in the range of 0.05 to 0.5 mm.

Preferably the filler component contains quartz flour and/or quartz sand in the range of 50 to 100 weight-%, preferably 70 to 100 weight-%, more preferably 90 to 100 weight-%, based on the total of the filler component.

Most preferably, the filler component consists essentially of a technical grade of quartz sand with a particle size in the range of 0.05 to 0.5 mm.

The total amount of mineral fillers in the inventive epoxy composition is in the range of 85 to 95 weight-%, preferably 88 to 93 weight-%, based on the total solids of the composition. Such a composition enables a heat generation of less than 3 MJ/kg and has a good enough flow behavior to be applicable in a layer thickness in the range of 1 to 3 mm or more.

In the epoxy composition including water, the total amount of mineral fillers is in the range of 70 to 90 weight-%, preferably 75 to 85 weight-%.

Preferably, the hardener component contains 60 to 90 weight-%, more preferably 70 to 90 weight-%, particularly 75 to 88 weight-%, mineral fillers, preferably at least part of it in the form of barite flour, quartz flour, titanium dioxide and/or calcium carbonate. Preferably, additional mineral filler is used as separately packed filler component, which is preferably based on quartz sand.

Optionally, the epoxy composition contains further ingredients, particularly
- non-reactive diluents or solvents, particularly xylene, 2-methoxyethanol, dimethoxyethanol, 2-ethoxyethanol, 2-propoxyethanol, 2-isopropoxyethanol, 2-butoxyethanol, 2-phenoxyethanol, 2-benzyloxyethanol, benzyl alcohol, ethylene glycol, ethylene glycol dimethylether, ethylene glycol diethylether, ethylene glycol dibutylether, ethylene glycol diphenylether, diethylene glycol, diethylene glycol monomethylether, diethylene glycol monoethylether, diethylene glycol mono-n-butylether, diethylene glycol dimethylether, diethylene glycol diethylether, diethylene glycol di-n-butylylether, propylene glycol monobutylether, propylene glycol monophenylether, dipropylene glycol, dipropylene glycol monomethylether, dipropylene glycol dimethylether, dipropylene glycol di-n-butylether, diphenylmethane, diisopropylnaphthalene, fractions of mineral oil such as Solvesso® (from Exxon), alkylphenols such as tert.butylphenol, nonylphenol, dodecylphenol, cardanol (from cashew nut shell oil, containing as main ingredient 3-(8,11,14-pentadecatrienyl)phenol), styrenated phenol, bisphenols, aromatic hydrocarbon resins, particularly such containing phenolic groups, alkoxylated phenol, particularly ethoxylated or propoxylated phenol, particularly 2-phenoxyethanol, adipates, sebacates, phthalates, benzoates, organophosphates, organosulfonates or sulfonamides. Preferred thereof are diluents with a boiling point of more than 200°C, particularly benzyl alcohol, styrenated phenol, ethoxylated phenol, aromatic hydrocarbon resins containing phenolic groups, particularly Novares® LS 500, LX 200, LA 300 or LA 700 (all from Ruetgers), diisopropylnaphthalene or cardanol.
- accelerators for the reaction between amines and epoxides, particularly acids or substances which can be hydrolized to acids, particularly carbonic acids such as acetic acid, benzoic acid, salicylic acid, 2-nitrobenzoic acid, lactic acid, organo-sulfonic acids such as methanesulfonic acid, p-toluenesulfonic acid or 4-dodecylbenzenesulfonic acid, esters of sulfonic acids, other organic or anorganic acids such as phosphoric acid, or of the before mentioned acids and esters; nitrates such as particularly calcium nitrate; tertiary amines such as 1,4-diaza-bicyclo[2.2.2]octane, benzyldimethylamine, α-methylbenzyldimethylamine, triethanolamine, dimethylaminopropylamine, imidazoles such as N-methylimidazole, N-vinylimidazole or 1,2-dimethylimidazole, salts of such tertiary amines, quaternary ammonium salts such as benzyltrimethylammonium chloride, amidines such as 1,8-diazabicyclo[5.4.0]undec-7-en, guanidines such as 1,1,3,3-tetramethylguanidine, phenoles, such as bisphenols, phenolic resins or Mannich bases such as 2-(dimethylaminomethyl)phenol, 2,4,6-tris(dimethylaminomethyl)-phenol or polymers from phenol, formaldehyde and N,N-dimethyl-1,3-propanediamine, phosphites such as di- or triphenylphosphite, or mercapto-functional compounds. Preferred thereof are acids, nitrates, tertiary amines or Mannich bases, particularly salicylic acid, calcium nitrate or 2,4,6-tris(dimethylaminomethyl)phenol or a combination thereof.
- other fillers such as carbon black, graphite, metallic powders out of aluminum, copper, iron, zinc, silver or steel, PVC powder or hollow spheres.
- organic pigments;
- other reactive diluents such as epoxidized soybean or linseed oil, acetoacetate functional compounds such as acetoacetylated polyols, butyrolactone, carbonates, aldehydes, isocyanates or silicones containing reactive groups;
- further amines, particularly adducts of the afore mentioned amines with diepoxides or monoepoxides, or polyamidoamines, or mannich bases, particularly phenalkamines, or monoamines such as benzylamine or furfurylamine, or aromatic polyamines such as 4,4'-, 2,4' and/or 2,2'-diaminodiphenylmethane, 2,4- and/or 2,6-toluenediamine, 3,5-dimethylthio-2,4- and/or -2,6-toluenediamine, 3,5-diethyl-2,4- and/or -2,6-toluendiamine;
- mercapto-functional compounds, particularly liquid, mercaprto-functional polysulfid polymers, mercaprto-functional polyoxyalkylenes, polyesters from thiocarbonic acids, 2,4,6-trimercapto-1,3,5-triazine, triethylene glycol dimer-captan or ethandithiol;
- polymers, such as polyamide, polysulfide, polyvinylformal (PVF), polyvinylbutyral (PVB), Polyurethane (PUR), polymers with carboxylic groups, polyamide, butadien-acrylonitrile-copolymers, styrene-acrylonitrile-copolymers, butadiene-styrene-copolymers, homo- or copolymers of unsaturated monomers, particularly of ethylene, propylene, butylene, isobutylene, isoprene, vinyl acetate or alkyl(meth)acrylate, particularly chlorosulfonated polyethylene or fluorine containing polymers or sulfonamide modified melamine;
- fibres, particularly glass fibres, carbon fibres, metal fibres, ceramic fibres or plastic fibres such as polyamide fibres or polyethylene fibres;
- rheology modifiers, such as thickeners or anti-settling agents;
- adhesion promoters, particularly organoalkoxysilanes;
- flame retarding agents, particularly the already mentioned mineral fillers aluminum hydroxide, particularly aluminum trihydroxide (ATH), or magnesium hydroxide, further antimony trioxide, antimony pentoxide, boric acid (B(OH)₃), zinc borate, zinc phosphate, melamine borate, melamine cyanurate, ammonium polyphosphate, melamine phosphate, melamine pyrophosphate, polybrominated diphenyloxides or diphenylethers, phosphates such as diphenylcresyl phosphate, resorcinol bis(diphenylphosphate), resorcinol diphosphate oligomer, tetraphenylresorcinol diphosphite, ethylenediamine diphosphate, bisphenol A bis(diphenylphosphate), tris(chloroethyl) phosphate, tris(chloropropyl) phosphate, tris(dichloroisopropyl) phosphate, tris[3-bromo-2,2-bis(bromomethyl)-propyl]phosphate, tetrabromo bisphenol A, bis(2,3-dibromopropylether) of bisphenol A, bromated epoxy resins, ethylene bis(tetrabromophthalimide), ethylene bis(dibromonorbornanedicarboximide), 1,2-bis(tribromophenoxy)-ethane, tris(2,3-dibromopropyl) isocyanurate, tribromophenol, hexabromocyclododecane, bis(hexachlorocyclopentadieno)cyclooctane or chlorinated paraffines;
- additives, such as dispersed paraffin wax, coalescent agents, biocides, stabilizers against oxidation, heat, light or UV-radiation, or particularly surface active additives such as wetting agents, defoamers, deaerating agents, dispersing aids or leveling agents,.

Such further ingredients can be part of the hardener and/or the resin and/or the filler component, whereas ingredients containing reactive groups, which can react with epoxides, are preferably part of the hardener component, epoxy functional ingredients are preferably part of the resin component, and only powdery ingredients are preferred as part of the filler component. It is also possible that such ingredients are used in the form of a separately packed further component.

A preferred waterborne hardener component contains
- 2 to 10 weight-%, preferably 4 to 8 weight-%, of the described amine functional adduct,
- 60 to 90 weight-% mineral fillers,
- 5 to 20 weight-%, preferably 8 to 15 weight-%, water,
- 0 to 5 weight-%, preferably 0 to 2.5 weight-%, other amines,
- 0 to 5 weight-%, preferably 0.5 to 3 weight-%, surface active additives, and optionally further ingredients,
based on the total waterborne hardener component.

A preferred resin component contains
- 40 to 80 weight-%, preferably 50 to 70 weight-%, liquid epoxy resin based on bisphenol A, F, or A/F,
- 0 to 15 weight-%, preferably 2 to 7 weight-%, reactive diluents,
- 20 to 60 weight-%, preferably 30 to 50 weight-%, water,
- 0.5 to 10 weight-%, preferably 1 to 5 weight-%, surface active additives, and optionally further ingredients,
based on the total waterborne resin component.

A preferred filler component consists essentially of a technical grade of quartz sand, preferably with a particle size in the range of 0.05 to 0.5 mm.

Preferably, the total composition contains water in the range of 5 to 20 weight-%, preferably 6 to 12 weight-%, based on the total composition.

Preferably the total composition contains less organic materials than 15 weight-%, preferably less than 12 weight-%, more preferably less than 11 weight-%, based on the total solids content of the composition.

Preferably the epoxy coating contains a low amount of volatile organic solvents, preferably less than 2 weight-%, more preferably less than 1 weight-%, most preferably it is essentially free from volatile organic solvents with a boiling point of 200°C or less.

Preferably, the number of groups, which are reactive towards epoxy groups, in ratio to the number of epoxy groups is in the range of 0.5 to 1.5, preferably 0.7 to 1.2, in the total composition.

Primary and secondary amine groups and optionally further reactive groups in the epoxy composition react with epoxy groups by ring opening of the epoxy groups (addition reaction). The epoxy composition hardens by polymerizing mainly through this reaction.

The hardener and the resin component are produced separately from each other by mixing all ingredients to obtain a homogenous fluid.

The hardener component, the resin component and, if present, the filler component are stored separately from each other in separately packed containers.

A suitable container for the storage of the hardener or the resin component is particularly a drum, a bucket, a can, a tin, a tube, a waterproof bag or a sausage. A suitable container for the storage of the filler component is particularly a bag or a bucket.

The separately stored components are storage stable, i.e. they can be stored during several months up to one year or longer without changing their properties to an extent which is relevant for their use.

For the use of the epoxy composition, the hardener, the resin and optional further components, particularly the filler component, are mixed together short before or during the application. If there is a filler component, the components can be mixed in any suitable order. Preferably, they are mixed in such a way, that the hardener and the resin component are premixed, followed by the addition of the filler component and remixing. The mixing ratio between the components is preferably so, that the ratio between the reactive groups results is in a suitable ratio, as given before, and that the total content of mineral fillers is in the claimed ratio. In weight parts, the ratio between the hardener and the resin component is typically in the range of 10:1 to 1:1, and the ratio between the combined hardener and resin component to the filler component is typically in the range of 4:1 to 1:2.

The mixing of the components is typically done batchwise, but it is also possible to mix the components in a continuous process. If the mixing is not done immediately before the application, attention has to be paid that the application is done within the pot life of the epoxy composition. The mixing of the components is particularly done at ambient temperatures, which is typically in the range of about 5 to 40°C, particularly about 10 to 35°C.

The epoxy composition has a low viscosity short after mixing of its components. Preferably the dynamic viscosity is in the range of 400 mPa·s to 4'000 mPa·s 5 minutes after mixing of the components is finished, measured at 20°C with a cone/plate viscometer at a shear rate of 100 s⁻¹ (cone diameter 50 mm, cone angle 1°, cone tip to plate distance 0.05 mm).

Upon mixing of the components, the curing of the epoxy composition starts by chemical reaction, as described above. Curing typically takes place at a temperature in the range of 0 to 70°C. Preferably, it takes place at ambient conditions and typically extends over a few days to weeks, depending on the temperature, the reactivity and stoichiometry of the ingredients and the content of accelerators. Upon curing, the water and other volatile non-reactive ingredients evaporate to the environment.

The application of the epoxy composition is done onto at least one substrate. Suitable substrates are preferably
- concrete, mortar, cement screed, fibre cement, brick, tile, plaster, gypsum, natural stone such as granite or marble, ceramic or glass;
- repair or leveling materials based on PCC (polymer-modified cement composition) or ECC (epoxy-modified cement composition);
- metals or alloys such as aluminum, iron, steel, copper or other non-ferrous metals, including surface treated metals such as galvanized or chromed metals.

Further possible substrates are
- asphalt or bitumen;
- leather, textiles, paper, wood, composite materials containing resin bound wood, particularly with resins based on phenols, melamine or epoxy, composite materials based on resins and textiles, or other composite materials;
- plastics such as hard or soft PVC, polycarbonate, polystyrene, polyester, polyamide, PMMA, ABS, SAN, epoxy materials, phenol resins, PUR, POM, TPO, PE, PP, EPM or EPDM, each in untreated or surface treated form, particularly by plasma, corona or flame;
- fibre reinforced plastics, such as carbon fibre reinforced plastic (CFRP), glass fibre reinforced plastic (GFRP) or sheet moulding compounds (SMC);
- insulating foams, particularly based on EPS, XPS, PUR, PIR, rock wool, glass wool or foamglass;
- coated or lacquered substrates, particularly glazed tiles, painted concrete, powder-coated metals or alloys or varnished metal sheets;
- coatings, paints or varnishes, particularly coated floors, which are to be overcoated with a floor covering.

It can be advantageous to pretreat the substrate before applying the epoxy composition, particularly by a physical and/or chemical cleaning process or by applying a primer and/or an undercoat.

The epoxy composition is preferably used as coating, sealant, adhesive or casting compound. Preferably it is used for coating floors, silos, tubes or roofs. Particularly preferred is the use of the epoxy composition as floor coating. Such a floor coating has good fire resistant properties with a particularly low heat generation upon burning. Preferably the cured floor coating generates heat according to EN 13501-1 of less than 3 MJ/kg, which enables to fulfill fire classification A2fl.

Preferably, the mixed epoxy composition is applied in liquid state within its pot life, typically by being poured onto the substrate, followed by being spread with a tool such as a squeegee, a notched trowel or a roller, to get the desired dry film thickness, which is preferably in the range of 1 to 3 mm.

The mixed epoxy composition has good flow and self-leveling properties, which means it is easy to be spread and develops an even surface upon application. After curing, the surface is homogenous, even and glossy, which enables its use as the top layer of a floor covering with decorative purpose. Nevertheless, it can be overcoated, if desired. Such an overcoat can also be based on epoxy, or it can be based on another material such as a polyurethane, acrylates or polyurea.

Another subject of the invention is a method for coating, comprising the steps of
(i) mixing the components of the described epoxy composition,
(ii) applying the mixed composition onto a substrate within its pot life in a layer thickness in the range of 0.5 to 5 mm, preferably 1 to 3 mm,
followed by the curing of the system.

The substrate, onto which the epoxy composition is applied, is preferably a floor, particularly a concrete floor, a cement screed, or any other non-combustible floor. The substrate can be pretreated with a primer or a base coat before the epoxy composition according to the invention is applied.

Preferably, the applied epoxy composition is part of a floor coating system containing optionally a so called primer, followed optionally by a so called base coat, followed by one or more layers of the epoxy composition according to the invention. It is possible to use a top coat as topmost layer, but this is not necessary, as the epoxy composition according to the invention develops a nice surface usable for decorative purpose.

A primer is typically an epoxy composition, which is able to wet the surface of the substrate, for example a concrete floor or a cement screed. It binds dust and penetrates into the pores and therefore is able to close them. It is typically used in an amount of 200 to 500 g/m².

A base coat is typically also an epoxy composition. It can be filled or unfilled. It is typically used to equalize bumps or holes to get an even surface.

A top coat is used in a layer thickness of about 0.1 to 0.5 mm. It can be an epoxy composition or another material, for example a polyurethane. It can be waterborne or not.

Another subject of the invention is an article, containing the cured epoxy composition, which was obtained by the described method for coating. Preferably it contains the cured epoxy composition in the form of a floor coating. The article can be a building or part of a building, such as an industrial hall, a stairwell, an office, a laboratory, an audience room, a lounge, a storage room, a parking deck, a balcony, a terrace, a roof or a bridge.

Another subject of the invention is the use of a waterborne hardener containing an amine functional adduct, which is the reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin,
in a molar ratio of primary amine groups to epoxy groups in the range of 1.5 to 4, preferably 2 to 3, as described above,
to cure at least one epoxy resin.

This use enables epoxy compositions with good flow and self-leveling properties at an unusually high content of mineral fillers up to the range of 75 to 95 weight-%, preferably 80 to 95 weight-%, more preferably 85 to 95 weight-%, based on the total solids of the composition, together with an even and glossy surface without defects upon curing at ambient conditions.

### Examples

The following examples illustrate the present invention without being limiting.
"AHEW" means amine hydrogen equivalent weight.
"EEW" means epoxy group equivalent weight.
"Normal climate" means a temperature of 23±1°C and a relative atmospheric moisture of 50±5%.

Chemical substances not otherwise specified are from Sigma-Aldrich Chemie GmbH.

The viscosity was determined by a Brookfield viscometer with spindle number 3 at speed number 5.

### Used substances:

| | |
|---|---|
| Jeffamine® D-400: | polyoxypropylene diamine, average molecular weight Mₙ 430 g/mol, AHEW 115 g/mol, equivalent weight per primary amine group 230 g/mol, from Huntsman |
| TEPA: | tetraethylene pentamine, AHEW 30 g/mol, equivalent weight per primary amine group 95 g/mol, technical grade, from Huntsman |
| MXDA: | 1,3-bis(aminomethyl)cyclohexane, AHEW 34 g/mol, equivalent weight per primary amine group 68 g/mol, from Mitsubishi Gas Chem. |
| Grilonit® F 704: | polypropylene glycol diglycidylether, EEW 330 g/mol, from EMS-Chemie |
| Araldite® DY-F: | polypropylene glycol diglycidylether, EEW 475 g/mol, from Huntsman |
| D.E.R.™ 358: | Bisphenol A/F diglycidylether containing hexandiol diglycidylether, EEW 180 g/mol, from Dow |
| Beckopox® EP 384w: | solid epoxy resin dispersed in water, solids content 60 weight-%, EEW 980 g/mol (including water), from Allnex |
| Araldite® DY-P: | p-tert.butylphenyl glycidylether, EEW 233 g/mol, from Huntsman |
| Araldite® GY 250: | Bisphenol A diglycidylether, EEW 188 g/mol, from Huntsman |
| Epikote ™ Resin 05447: | Bisphenol A/F diglycidylether, EEW 177 g/mol, from Momentive |
| Araldite® DY-E: | monoglycidylether of C₁₂ to C₁₄ alcohols, EEW 290 g/mol, from Huntsman |
| Additives: | defoamers and dispersing aids |
| Emulsifier: | Disponil® LS 500, from BASF |
| Epilink® 701 | waterborne curing agent, AHEW 300 g/mol, water content 45 weight-%, from Evonik |
| Anquamine® 401 | waterborne curing agent, AHEW 200 g/mol, water content 30 weight-%, from Evonik |
| Ancamine® K54 | 2,4,6-Tris(dimethylaminomethyl)phenol, from Evonik |

### Preparation of amine functional adducts:

### Adduct A1:

20.33 wpt Jeffamine® D-400, 9.93 weight-parts (wpt) TEPA, 5.92 wpt MXDA and 4.59 wpt Beckopox® EP 384w were put in a round bottom flask and heated to 70°C. Then, a premix of 6.16 wpt Grilonit® F 704, 13.62 wpt Araldite® DY-F and 11.29 wpt D.E.R.™ 358 was slowly added under good stirring and the temperature in the flask was kept below 85°C. Afterwards, the reaction mixture was held at 80 to 85°C during 2 hours, followed by the addition of 26.14 wpt tap water and 2.02 wpt acetic acid, each under good stirring. The obtained amine functional adduct was cooled to room temperature. It had a solids content of 72 weight-%, a viscosity at 20°C of 3.5 Pas, a calculated AHEW of 176.3 g/eq and a clear, yellowish aspect.

### Adduct A2:

The Adduct **A2** was made as described for Adduct **A1** with the amounts of the ingredients given in table 1. The Araldite® DY-P was added after the addition of the premix of Grilonit® F 704, Araldite® DY-F and D.E.R.™ 358 was finished. Then, the reaction mixture was held at 80 to 85°C during 2 hours, followed by the addition of the tap water and the acetic acid. The obtained amine functional adduct had a solids content of 72 weight-%, a viscosity at 20°C of 3.2 Pas, a calculated AHEW of 172.6 g/eq and a clear, yellowish aspect.

### Adduct R1:

The Adduct **R1** was made as described for Adduct **A1** with the amounts of the ingredients given in table 1. The obtained amine functional adduct had a solids content of 72 weight-%, a viscosity at 20°C of 3.2 Pas, a calculated AHEW of 151.2 g/eq and a clear, yellowish aspect.

### Adduct R2:

The Adduct **R2** was made as described for Adduct **A1** with the amounts of the ingredients given in table 1. The obtained amine functional adduct had a solids content of 72 weight-%, a viscosity at 20°C of 8.9 Pas, a calculated AHEW of 129.2 g/eq and a clear, yellowish aspect.

### Adduct R3:

The Adduct **R3** was made as described for Adduct **A1** with the amounts of the ingredients given in table 1. The obtained amine functional adduct had a solids content of 72 weight-%, a viscosity at 20°C of 1.7 Pas, a calculated AHEW of 243.5 g/eqand a clear, yellowish aspect.

The adducts **A1** and **A2** are amine functional adducts according to the invention. The adducts **R1** to **R3** are for comparison.

**Table 1: Composition (in weight parts) and features of the adducts A1, A2 and R1 to R3.**

| **Adduct** | **A1** | **A2** | **R1** | **R2** | **R3** |
|---|---|---|---|---|---|
| (a) Jeffamine® D-400 | 20.33 | 20.69 | 23.90 | 0 | 29.54 |
| (b) TEPA | 9.93 | 10.10 | 11.67 | 17.58 | 0 |
| (c) MXDA | 5.92 | 6.07 | 6.96 | 11.16 | 8.87 |
| Beckopox® EP 384w | 4.59 | 4.02 | 5.40 | 5.60 | 4.28 |
| (d) Grilonit® F 704 | 6.16 | 5.39 | 0 | 7.51 | 5.75 |
| (d) Araldite® DY-F | 13.62 | 11.92 | 0 | 16.61 | 12.72 |
| (e) D.E.R.™ 358 | 11.29 | 9.88 | 24.26 | 13.77 | 10.54 |
| Araldite® DY-P | 0 | 3.56 | 0 | 0 | 0 |
| tap water | 26.14 | 26.35 | 25.81 | 25.77 | 26.30 |
| acetic acid | 2.02 | 2.02 | 2.00 | 2.00 | 2.00 |
| viscosity at 20°C [Pas] | 3.5 | 3.2 | 3.2 | 8.8 | 1.7 |
| AHEW (calc.) [g/mol] | 176.3 | 172.6 | 151.2 | 129.2 | 243.5 |
| water content [wt-%] | 28 | 28 | 28 | 28 | 28 |

### Preparation of epoxy compositions:

### Examples 1 to 8:

There was prepared a **hardener component** for each example by mixing the ingredients given in table 2 and table 3 and storage in a closed container.

There was further prepared a **resin component** for each example by mixing 3.294 weight parts (wpt) Araldite® GY 250, 4.942 wpt Epikote™ Resin 05447, 0.539 wpt Araldite® DY-E, 0.175 wpt emulsifier and 5.050 wpt tap water and storage in a closed container.

There was further prepared a **filler component** for each example consisting of quartz sand 0.1 to 0.3 mm and storage in a paper bag.

The resin component, the hardener component and the filler component were mixed together in the proportion (weight parts) given in table 2 and table 3 by a drilling machine with a stirring rod. The freshly mixed epoxy compositions were applied onto a horizontally placed cement screed panel by a tooth squeegee in a layer thickness of 2 mm and allowed to cure in normal climate during 7 days. **Flow behavior** was determined by eye and judged on a scale from 1 (poor) to 5 (good).

**Self-leveling** was determined by eye and judged on a scale from 1 (poor) to 5 (good).

**Shrinkage** was measured by casting a bar of 500mm x 30mm x 4mm and judged on a scale from 1 (poor) to 5 (good). Good means a low shrinkage.

**Gloss** was determined by a gloss meter and judged on a scale from 1 (poor) to 5 (good).

**Shore D** hardness was measured according to DIN 53505 after storage in normal climate for 1 day and for 7 days.

**Phase separation** was named "no", if there was no phase separation of the hardener and epoxy components after being mixed together; and named "yes", if there was.

**Heat generation** was determined by a bomb calorimetric test according to EN 13501-1 for floors.

The compositions and test results are given in table 2 and table 3.

Examples with "(Ref.)" are reference examples.

**Table 2: Composition (in weight parts) of the examples 1 to 5.**

| **Example** | **1** | **2** | **3 (Ref.)** | **4 (Ref.)** | **5 (Ref.)** |
|---|---|---|---|---|---|
| **Hardener Component:** | | | | | |
| **Adduct¹** | **A1** | **A2** | **R1** | **R2** | **R3** |
| | 7.826 | 7.826 | 7.826 | 7.826 | 7.826 |
| tap water | 7.783 | 7.783 | 7.783 | 7.783 | 7.783 |
| MXDA | 0.860 | 0.836 | 0.620 | 0.320 | 1.285 |
| titanium dioxide | 6.020 | 6.020 | 6.020 | 6.020 | 6.020 |
| barite flour | 62.049 | 62.049 | 62.049 | 62.049 | 61.624 |
| additives | 1.462 | 1.486 | 1.678 | 2.002 | 1.462 |
| **Resin Component:** | 14.000 | 14.000 | 14.000 | 14.000 | 14.000 |
| **Filler Component:** | 80.000 | 80.000 | 80.000 | 80.000 | 80.000 |
| mixing ratio² | 86/14/80 | 86/14/80 | 86/14/80 | 86/14/80 | 86/14/80 |
| water content³ [wt-%] | 8.35 | 8.35 | 8.35 | 8.35 | 8.35 |
| filler content [wt-%] | 82.26 | 82.26 | 82.26 | 82.26 | 82.02 |
| filler content on solids⁴ [wt-%] | 89.8 | 89.8 | 89.8 | 89.8 | 89.5 |
| flow behavior | 5 | 5 | 3 | 3 | 5 |
| self-leveling | 5 | 5 | 5 | 4 | 5 |
| shrinkage | 4 | 5 | 5 | 3 | 5 |
| gloss | 5 | 4 | 1 | 4 | 3 |
| phase separation | no | no | no | no | yes |
| heat generation [MJ/kg] | 2.3 | n.d. | n.d. | n.d. | n.d. |

| | | | | | |
|---|---|---|---|---|---|
| ¹ prepared as described above ² hardener to resin to filler component, by weight ³ based on the total composition ⁴ based on the calculated solids content of the total composition "n.d." means "not determined" | | | | | |

**Table 3: Composition (in weight parts) of the examples 6 to 8.**

| **Example** | | **6** | **7** | **8 (Ref.)** |
|---|---|---|---|---|
| **Hardener Component:** | | | | |
| **Adduct A1¹** | | 7.8 | 5.6 | - |
| Epilink® 701 | | - | - | 9.3 |
| Anquamine® 401 | | - | 0.16 | 2.1 |
| tap water | | 7.8 | 7.3 | 5.9 |
| Ancamine® K54 | | 0.9 | - | - |
| MXDA | | - | 0.82 | - |
| titanium dioxide | | 6.0 | - | 3.9 |
| barite flour | | 62.0 | 66.8 | 36.9 |
| quartz flour | | - | - | 27.6 |
| additives | | 1.5 | 1.32 | 1.6 |
| **Resin Component:** | | 14.0 | 18.0 | 12.7 |
| **Filler Component:** | | 80.0 | 80.0 | 10.0 |
| mixing ratio² | | 86/14/80 | 82/18/80 | 87.3/12.7/10 |
| water content³ [wt-%] | | 8.35 | 8.56 | 13.91 |
| filler content [wt-%] | | 82.22 | 81.55 | 71.27 |
| filler content on solids⁴ [wt-%] | | 89.7 | 89.2 | 82.8 |
| flow behavior | | 5 | 5 | 5 |
| self-leveling | | 4 | 4 | 5 |
| shrinkage | | 4 | 4 | 4 |
| gloss | | 5 | 4 | 1 |
| Shore D | (1d) | 48 | 27 | 63 |
| | (7d) | 67 | 68 | 71 |
| heat generation [MJ/kg] | | 2.4 | 2.6 | 3.8 |

| | | | | |
|---|---|---|---|---|
| ¹ prepared as described above ² hardener to resin to filler component, by weight ³ based on the total composition ⁴ based on the calculated solids content of the total composition | | | | |

## Claims

1. Epoxy composition including
- a waterborne hardener component containing an amine functional adduct, which is a reaction product of
(a) at least one polyether amine,
(b) at least one polyalkylene amine,
(c) at least one arylaliphatic or cycloaliphatic amine,
(d) at least one polyether epoxy resin, and
(e) at least one aromatic liquid epoxy resin,
- a resin component containing at least one liquid epoxy resin, and
- mineral fillers,
wherein the composition contains mineral fillers in the range of 85 to 95 weight-% based on the total solids of the composition.

2. Epoxy composition according to claim 1, wherein the polyether amine is a polyoxypropylene diamine with an average molecular weight Mₙ in the range of 200 to 2'000 g/mol, preferably 200 to 500 g/mol.

3. Epoxy composition according to any one of claims 1 to 2, wherein the polyalkylene amine is an amine of the formula (I), 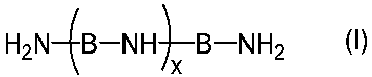 wherein
x is a whole number from 1 to 6, and
B is independently of each other a C₂ to C₆ alkylene group.

4. Epoxy composition according to any one of claims 1 to 3, wherein the arylaliphatic or cycloaliphatic amine has two primary amine groups, is free from secondary or tertiary amine groups and has a molecular weight in the range of 100 to 300 g/mol.

5. Epoxy composition according to any one of claims 1 to 4, wherein the polyether epoxy resin is a polypropylene glycol diglycidylether.

6. Epoxy composition according to any one of claims 1 to 5, wherein the overall ratio between the primary amine groups and the epoxy groups in the reaction to form the amine functional adduct is in the range of 1.5 to 4.

7. Epoxy composition according to any one of claims 1 to 6, wherein the resin component is a waterborne resin component and contains water in the range of 20 to 50 weight-%, preferably 30 to 40 weight-%, based on the total of the resin component.

8. Epoxy composition according to any one of claims 1 to 7, which includes additionally a filler component.

9. Epoxy composition according to claim 8, wherein the filler component consists essentially of a technical grade of a quartz sand with a particle size in the range of 0.05 to 0.5 mm.

10. Epoxy composition according to any one of claims 1 to 9, wherein the waterborne hardener component contains
- 2 to 10 weight-% of the amine functional adduct,
- 60 to 90 weight-% mineral fillers,
- 5 to 20 weight-% water,
- 0 to 5 weight-% other amine hardeners,
- 0 to 5 weight-% surface active additives,
and optionally further ingredients,
based on the total waterborne hardener component.

11. Epoxy composition according to any one of claims 1 to 10, wherein the resin component contains
- 40 to 80 weight-%, preferably 50 to 70 weight-%, liquid epoxy resin based on bisphenol A, F, or A/F,
- 0 to 15 weight-%, preferably 2 to 7 weight-%, reactive diluents,
- 20 to 60 weight-%, preferably 30 to 50 weight-%, water,
- 0.5 to 10 weight-%, preferably 1 to 5 weight-%, surface active additives, and optionally further ingredients,
based on the total waterborne resin component.

12. Method for coating, comprising the steps of
(i) mixing the components of the epoxy composition according to any one of claims 1 to 11,
(ii) applying the mixed composition onto a substrate within its pot life in a layer thickness in the range of 0.5 to 5 mm,
followed by the curing of the system.

13. Method according to claim 12, wherein the substrate is a floor.

14. Article containing the cured epoxy composition, which was obtained by the method according to any one of claims 12 to 13.

15. Use of a waterborne hardener containing an amine functional adduct, which is the reaction product of
(a) at least one polyether amine,
(b) at least one polyalkylene amine and
(c) at least one arylaliphatic or cycloaliphatic amine,
(d) at least one polyether epoxy resin, and
(e) at least one aromatic liquid epoxy resin,
in a molar ratio of primary amine groups to epoxy groups in the range of 1.5 to 4,
to cure at least one epoxy resin.
